# EUROPÄISCHE PATENTSCHRIFT

(11) **EP 4 056 772 B1**
(45) Veröffentlichungstag und Bekanntmachung des Hinweises auf die Patenterteilung: **16.09.2026**
(21) Anmeldenummer: 22160826.8
(22) Anmeldetag: 08.03.2022
(51) Int. Cl.: E03C 1/04, E03C 1/10, G01F 1/56

(54) **SANITÄRARMATUR MIT EINEM DURCHFLUSSSENSOR**
SANITARY FITTING WITH A FLOW SENSOR
ROBINETTERIE DOTÉE D'UN CAPTEUR DE DÉBIT

(30) Priorität: 12.03.2021 DE 102021106079
(43) Veröffentlichungstag der Anmeldung: 14.09.2022
(73) Patentinhaber: Grohe AG, 58675 Hemer (DE)
(72) Erfinder: STEINHOFF, Stefan, 59846 Sundern (DE); BRAND, Henning, 44263 Dortmund (DE)

(56) Entgegenhaltungen:
- EP-B1- 2 073 673
- WO-A1-2019/108658
- CN-U- 212 377 369
- DE-U1- 202004 013 488
- DE-U1- 202014 102 568

## Beschreibung

Die vorliegende Erfindung betrifft eine Sanitärarmatur, die insbesondere der bedarfsgerechten Bereitstellung einer Flüssigkeit an einem Waschbecken, Spülbecken, Dusche und/oder Badewanne dienen kann.

Es sind zahlreiche Sanitärarmaturen zur bedarfsgerechten Bereitstellung einer Flüssigkeit bekannt, beispielsweise aus EP 2 073 673 B1, DE 20 2004 013 488 U1, DE 20 2014 102 568 U1, WO 2019/108658 A1 und CN 212377369 U.

Sanitärarmaturen können elektrische Verbraucher aufweisen, die beispielsweise zur Bereitstellung von Zusatzfunktionen und/oder Komfortfunktionen dienen können. Zur Energieversorgung der elektrischen Verbraucher werden häufig Batterien verwendet. Zur Verlängerung der Lebensdauer der Batterien ist es wünschenswert, die elektrischen Verbraucher nur dann einzuschalten, wenn Wasser durch die Sanitärarmaturen abgegeben wird. Hierzu werden typischerweise mechanische Lösungen eingesetzt, die jedoch oft nur in einer senkrechten Einbaulage verwendbar sind (wie zum Beispiel im Falle von Schwimmschaltern) oder erst bei höheren Durchflussgeschwindigkeiten des Wassers ansprechen (wie zum Beispiel im Falle von Turbinen).

Aufgabe der Erfindung ist es daher, die mit Bezug auf den Stand der Technik geschilderten Probleme zumindest teilweise zu lösen und insbesondere eine Sanitärarmatur anzugeben, mit der der Energiebedarf mit Mitteln reduzierbar ist, die in einer beliebigen Einbaulage verwendbar und weniger schmutzanfällig sind.

Diese Aufgabe wird gelöst mit einer Sanitärarmatur gemäß den Merkmalen des unabhängigen Patentanspruchs. Weitere vorteilhafte Ausgestaltungen der Erfindung sind in den abhängigen Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, die zumindest Folgendes aufweist:
- ein Armaturengehäuse mit einer Flüssigkeitsleitung; und
- einen Durchflusssensor zum Detektieren eines Flüssigkeitsflusses durch die Flüssigkeitsleitung, wobei der Durchflusssensor einen Magnet aufweist, der durch die Flüssigkeit aus einer Ausgangsstellung verstellbar ist, und wobei ein Verstellen des Magnets aus der Ausgangsstellung durch einen Sensor des Durchflusssensors detektierbar ist.

Die Sanitärarmatur dient beispielsweise der Bereitstellung einer Flüssigkeit, insbesondere Wasser, an einem Spülbecken, Waschbecken, Dusche und/oder Badewanne. Die Sanitärarmatur weist ein Armaturengehäuse auf, das bevorzugt zumindest teilweise aus (Guss-)Metall, wie zum Beispiel Messing, und/oder Kunststoff besteht. Das Armaturengehäuse kann einen Auslauf aufweisen, der starr oder bewegbar, insbesondere verschwenkbar und/oder zumindest teilweise ausziehbar, an dem Armaturengehäuse befestigt ist. Zudem weist das Armaturengehäuse eine Flüssigkeitsleitung auf, die insbesondere zu einer Auslauföffnung für die Flüssigkeit führt. Über die Auslauföffnung ist die Flüssigkeit insbesondere an eine Umgebung der Sanitärarmatur abgebbar. Weiterhin kann die Auslauföffnung an dem Auslauf ausgebildet sein. Die Flüssigkeitsleitung kann in dem Armaturengehäuse beispielsweise zumindest teilweise nach Art eines Hohlraums, eines Kanals und/oder einer Bohrung ausgebildet sein. Dies kann insbesondere auch bedeuten, dass die Flüssigkeitsleitung zumindest teilweise durch das Armaturengehäuse ausgebildet ist und/oder dass es sich bei der Flüssigkeitsleitung nicht um ein separates Bauteil handeln kann. Zudem kann die Flüssigkeitsleitung zumindest teilweise als Schlauchleitung ausgebildet sein. Beispielsweise kann es sich bei der Flüssigkeitsleitung um eine Zuführleitungen für Kaltwasser und/oder Warmwasser handeln. Durch die Zuführleitungen ist das Kaltwasser und/oder Warmwasser beispielsweise einem Ventil der Sanitärarmatur zuführbar. Weiterhin kann es sich bei der Flüssigkeitsleitung auch um eine Mischwasserleitung bzw. einen Mischwasserkanal handeln. Mit der Mischwasserleitung bzw. dem Mischwasserkanal ist die Flüssigkeit insbesondere der Auslauföffnung zuführbar. Die Flüssigkeitsleitung kann beispielsweise das Ventil bzw. Mischventil mit der Auslauföffnung verbinden. Das Armaturengehäuse ist insbesondere an einem Träger, wie zum Beispiel einer Arbeitsplatte, einem Waschtisch, dem Spülbecken oder Waschbecken befestigbar. Hierzu kann der Träger eine Montageöffnung aufweisen, in die das Armaturengehäuse mit einem Montageabschnitt einsteckbar und/oder an der das Armaturengehäuse mit einem Befestigungselement, beispielsweise nach Art einer Mutter, befestigbar ist.

Das Ventil kann zur Steuerung einer Entnahmemenge der Flüssigkeit dienen. Weiterhin kann das Ventil beispielsweise nach Art eines Mischventils zum Mischen von Kaltwasser mit einer Kaltwassertemperatur und Warmwasser mit einer Warmwassertemperatur zu einem Mischwasser mit einer gewünschten Mischwassertemperatur ausgebildet sein. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Bei dem Mischventil kann es sich beispielsweise um eine Mischkartusche oder Thermostatkartusche handeln.

Zur Betätigung der Sanitärarmatur kann die Sanitärarmatur zumindest ein Betätigungselement aufweisen. Bei dem zumindest einen Betätigungselement kann es sich beispielsweise um einen Betätigungsgriff, eine Betätigungstaste, einen Betätigungspuck, und/oder eine Drückerplatte handeln. Über das zumindest eine Betätigungselement ist insbesondere die Entnahme der Flüssigkeit bzw. eine Eigenschaft der Flüssigkeit steuerbar. Insbesondere kann über das zumindest eine Betätigungselement die Mischwassertemperatur und/oder eine Entnahmemenge der Flüssigkeit einstellbar sein. Weiterhin kann auch vorgesehen sein, dass durch das zumindest eine Betätigungselement das Ventil bzw. Mischventil betätigbar ist. Zudem kann es sich bei der Sanitärarmatur auch um eine elektronische Sanitärarmatur handeln, bei der das Ventil, das Mischventil, die Mischwassertemperatur und/oder die Entnahmemenge der Flüssigkeit elektronisch steuerbar bzw. betätigbar sind. Hierzu kann die Sanitärarmatur beispielsweise einen Infrarotsensor aufweisen, mit denen Hände eines Benutzers der Sanitärarmatur in einem Flüssigkeitsabgabebereich der Sanitärarmatur detektierbar sind.

Die Sanitärarmatur weist einen Durchflusssensor zum Detektieren eines Flüssigkeitsflusses durch die Flüssigkeitsleitung auf. Ein Flüssigkeitsfluss in der Flüssigkeitsleitung liegt insbesondere vor, wenn eine Strömungsgeschwindigkeit der Flüssigkeit in der Flüssigkeitsleitung größer als null ist. Kein Flüssigkeitsfluss in der Flüssigkeitsleitung liegt insbesondere vor, wenn die Strömungsgeschwindigkeit der Flüssigkeit in der Flüssigkeitsleitung (im Wesentlichen) null ist. Der Durchflusssensor umfasst einen Magnet, der durch die Flüssigkeit aus einer Ausgangsstellung verstellbar ist. Bei dem Magnet kann es sich insbesondere um einen Permanentmagnet handeln. Weiterhin ist der Magnet in einem Flüssigkeitskanal des Durchflusssensors angeordnet. Der Magnet ist in dem Flüssigkeitskanal durch eine Führung geführt. Die Führung ist nach Art einer Linearführung ausgebildet. Durch die Führung ist der Magnet in der Flüssigkeitsleitung bzw. dem Flüssigkeitskanal entlang eines (vorgegebenen) Stellwegs bewegbar. Insbesondere ist der Magnet parallel zu einer Längsachse des Durchflusssensors bewegbar. Bei der Längsachse kann es sich insbesondere um eine Zentrumsachse der Flüssigkeitsleitung bzw. des Flüssigkeitskanals handeln. Der Magnet befindet sich insbesondere in der Ausgangsstellung, wenn keine Flüssigkeit durch die Flüssigkeitsleitung strömt. Bei einem Strömen der Flüssigkeit durch die Flüssigkeitsleitung erzeugt die Flüssigkeit insbesondere eine Kraft, durch die der Magnet aus der Ausgangsstellung verstellt bzw. aus der Ausgangsstellung wegbewegt wird. Wird der Magnet aus der Ausgangsstellung verstellt, reduziert sich insbesondere eine Distanz zwischen dem Magnet und einem Sensor des Durchflusssensors. Durch den Sensor ist ein Magnetfeld des Magnets detektierbar, wenn der Magnet aus der Ausgangsstellung verstellt ist. Der Sensor kann beispielsweise nach Art eines Hall-Sensors oder Reedsensors ausgebildet sein. Weiterhin kann der Sensor beispielsweise an einer Außenseite des Durchflusssensors bzw. an einer Außenseite eines Gehäuses des Durchflusssensors angeordnet sein. Der Sensor kann mit einem Abstand zu der Längsachse angeordnet sein, der beispielsweise 5 mm (Millimeter) bis 50 mm betragen kann. Das Magnetfeld des Magnets ist durch den Sensor insbesondere nur dann detektierbar, wenn der Magnet durch die Flüssigkeit aus der Ausgangsstellung verstellt ist. Somit ist ein Flüssigkeitsfluss durch die Flüssigkeitsleitung bzw. den Flüssigkeitskanal detektierbar, wenn durch den Sensor das Magnetfeld des Magnets detektiert wird. Dies ermöglicht es insbesondere einen elektrischer Verbraucher der Sanitärarmatur nur dann zu aktivieren, wenn durch den Durchflusssensor ein Flüssigkeitsfluss durch die Flüssigkeitsleitung detektiert wird. Der elektrische Verbraucher kann insbesondere in und/oder an dem Armaturengehäuse angeordnet sein. Bei dem elektrischen Verbraucher handelt es sich insbesondere um eine Komponente, zu deren Betrieb elektrische Energie erforderlich ist. Mittels des elektrischen Verbrauchers kann beispielsweise eine Funktion der Sanitärarmatur steuerbar und/oder betätigbar sein. Beispielsweise kann es sich bei dem elektrischen Verbraucher um eine Steuerung, elektronische Steuerung, Prozessor, Mikrocontroller, Sensor, Infrarotsensor, Display, LED-Display, Temperaturanzeige (insbesondere für die Mischwassertemperatur), Funksender, Funkempfänger, Datenkommunikationsmodul, Wifi-Modul, Bluetooth-Modul, Datenspeicher, Aktor, Stellelement, Schalter, Antrieb und/oder Elektromotor handeln. Unter "Aktivieren" kann insbesondere ein Anschalten des elektrischen Verbrauchers und/oder Aufwecken des elektrischen Verbrauchers aus einem Stand-by-Modus verstanden werden. Weiterhin kann das Aktivieren beispielsweise ein Versorgen des elektrischen Verbrauchers mit elektrischer Energie umfassen. Nach dem Aktivieren kann sich der elektrische Verbraucher insbesondere in einem betriebsbereiten Zustand befinden. Zur Versorgung des elektrischen Verbrauchers kann die Sanitärarmatur eine Energiequelle aufweisen bzw. mit dieser verbunden sein. Die Energiequelle kann über eine Energieversorgungsleitung mit der Sanitärarmatur verbunden sein. Bei der Energiequelle kann es sich insbesondere um einen Speicher für elektrische Energie handeln. Zum Beispiel kann es sich bei der Energiequelle um eine Batterie oder ein Netzteil handeln. Bei der Energieversorgungsleitung kann es sich insbesondere um ein (flexibles) Kabel handeln. Die Energieversorgungsleitung kann lösbar mit der Sanitärarmatur verbunden sein. Hierzu kann die Energieversorgungsleitung beispielsweise über eine Steckverbindung mit der Sanitärarmatur verbunden sein. Zum Beispiel kann die Sanitärarmatur, beispielsweise im Bereich einer Montageöffnung des Armaturengehäuses, einen Stecker oder eine Buchse aufweisen, mit dem oder der die Energieversorgungsleitung verbindbar ist. Alternativ kann der Stecker oder die Buchse auch mithilfe eines Kabels aus der Montageöffnung bzw. dem Armaturengehäuse herausgeführt sein.

Wird das Ventil der Sanitärarmatur wieder geschlossen, strömt keine Flüssigkeit mehr durch die Flüssigkeitsleitung, sodass der Magnet in seine Ausgangsstellung zurückgestellt wird. In der Ausgangsstellung ist das Magnetfeld des Magnets durch den Sensor insbesondere nicht mehr detektierbar. Strömt keine Flüssigkeit durch die Flüssigkeitsleitung, kann der elektrische Verbraucher der Sanitärarmatur insbesondere wieder deaktiviert werden. Unter "Deaktivieren" kann hier insbesondere ein Ausschalten des elektrischen Verbrauchers und/oder Rückstellen des elektrischen Verbrauchers in den Stand-by-Modus verstanden werden. Weiterhin kann das Deaktivieren ein Unterbrechen der Versorgung des elektrischen Verbrauchers mit elektrischer Energie und/oder ein Trennen des elektrischen Verbrauchers von der Energiequelle umfassen. Nach dem Deaktivieren kann sich der elektrische Verbraucher insbesondere in einem nicht-betriebsbereiten Zustand befinden. Weiterhin verbraucht der elektrische Verbraucher im deaktivierten Zustand keine elektrische Energie oder zumindest weniger elektrische Energie als im aktivierten Zustand. Hierdurch ist der Energieverbrauch der Sanitärarmatur senkbar. Zudem ist der Durchflusssensor in beliebigen Einbaulagen verwendbar und unempfindlich gegen Verschmutzungen, die beispielsweise in der Flüssigkeit mitgeführt werden können.

Der Durchflusssensor ist zwischen einem Ventil der Sanitärarmatur und einer Auslauföffnung der Sanitärarmatur angeordnet. Der Durchflusssensor ist insbesondere entlang eines Strömungspfads der Flüssigkeit zwischen dem Ventil der Sanitärarmatur und der Auslauföffnung angeordnet und/oder detektiert einen Flüssigkeitsfluss innerhalb der Flüssigkeitsleitung entlang des Strömungspfads der Flüssigkeit zwischen dem Ventil der Sanitärarmatur und der Auslauföffnung.

Der Durchflusssensor kann nach Art eines Rückschlagventils ausgebildet sein. Hierdurch kann der Durchflusssensor ein Strömen der Flüssigkeit durch die Flüssigkeitsleitung nur in eine Richtung, insbesondere in Richtung der Auslauföffnung, zulassen.

Der Magnet kann an einem Schließelement des Durchflusssensors befestigt sein. Dies kann insbesondere bedeuten, dass der Magnet mit dem Schließelement in der Flüssigkeitsleitung bzw. dem Flüssigkeitskanal verstellbar bzw. bewegbar ist. Durch das Schließelement ist insbesondere ein Strömen der Flüssigkeit in Richtung des Ventils verhinderbar. Das Schließelement kann einen Führungsschaft aufweisen, der beispielsweise in einer Führungsöffnung der Führung angeordnet ist.

Das Schließelement kann sich in der Ausgangsstellung des Magnets in einer Schließstellung befinden. In der Schließstellung kontaktiert das Schließelement insbesondere einen Dichtsitz des Durchflusssensors bzw. eines Gehäuses des Durchflusssensors. Das Schließelement ist durch die Flüssigkeit insbesondere zwischen der Schließstellung und einer Offenstellung verstellbar. In der Offenstellung kann die Flüssigkeit insbesondere an dem Schließelement vorbeiströmen.

Das Schließelement kann in einem Flüssigkeitskanal des Durchflusssensors angeordnet sein und der Flüssigkeitskanal kann einen ersten Bereich mit einem ersten Innendurchmesser und einen zweiten Bereich mit einem zweiten Innendurchmesser aufweisen. Der Flüssigkeitskanal kann beispielsweise nach Art einer Bohrung in einem Gehäuse des Flüssigkeitskanals ausgebildet sein. Das Gehäuse kann zumindest teilweise aus Kunststoff oder einem Metall, wie zum Beispiel Messing, bestehen. Der Flüssigkeitskanal erstreckt sich insbesondere von einem Flüssigkeitszulauf des Durchflusssensors zu einem Flüssigkeitsablauf des Durchflusssensors. Der Flüssigkeitszulauf und/oder der Flüssigkeitsablauf sind insbesondere mit der Flüssigkeitsleitung verbunden. Insbesondere ist der Flüssigkeitszulauf über die Flüssigkeitsleitung mit dem Ventil und/oder der Flüssigkeitsablauf über die Flüssigkeitsleitung mit der Auslauföffnung verbunden. Der erste Bereich erstreckt sich insbesondere von dem Ventilsitz entlang der Längsachse in Richtung des zweiten Bereichs. Dies kann insbesondere bedeuten, dass sich der zweite Bereich unmittelbar an den ersten Bereich anschließt. Der zweite Bereich erstreckt sich insbesondere von dem ersten Bereich entlang der Längsachse in Richtung der Führung. Der erste Innendurchmesser und der zweite Innendurchmesser bemessen sich insbesondere orthogonal zu der Längsachse. Der erste Innendurchmesser kann beispielsweise 1 mm bis 30 mm betragen. Der zweite Innendurchmesser kann beispielsweise 5 mm bis 70 mm betragen. Weiterhin ist der zweite Innendurchmesser insbesondere größer als der erste Innendurchmesser. Der erste Bereich kann dadurch insbesondere nach Art einer Einschnürung ausgebildet sein.

Eine Dichtgeometrie des Schließelements kann den Flüssigkeitskanal in dem ersten Bereich verschließen und in dem zweiten Bereich freigeben. Dies kann insbesondere bedeuten, dass die Flüssigkeit nicht an der Dichtgeometrie vorbeifließen kann, wenn sich die Dichtgeometrie in dem ersten Bereich befindet. Weiterhin kann dies insbesondere bedeuten, dass die Flüssigkeit an der Dichtgeometrie vorbeiströmen kann, wenn sich die Dichtgeometrie in dem zweiten Bereich befindet. Die Dichtgeometrie kann insbesondere an einem ersten längsseitigen Ende des Schließelements ausgebildet sein, das insbesondere der Führung gegenüberliegt. Weiterhin kann die Dichtgeometrie zumindest teilweise nach Art eines Kegels oder Kegelstumpfs ausgebildet sein. Die Dichtgeometrie kontaktiert in der Schließstellung des Schließelements insbesondere den Ventilsitz des Durchflusssensors. Weiterhin kann die Dichtgeometrie einen Außendurchmesser aufweisen, der insbesondere (im Wesentlichen) dem ersten Innendurchmesser des ersten Bereichs des Flüssigkeitskanals entspricht. Der Magnet kann insbesondere an der Dichtgeometrie befestigt sein. Hierzu kann die Dichtgeometrie beispielsweise eine Aufnahme für den Magnet aufweisen.

Der erste Bereich des Flüssigkeitskanals kann parallel zu einer Längsachse des Flüssigkeitskanals eine erste Länge von 5 mm bis 50 mm aufweisen. Weiterhin kann der zweite Bereich des Flüssigkeitskanals parallel zu der Längsachse des Flüssigkeitskanals eine zweite Länge von 5 mm bis 50 mm aufweisen.

Der Magnet kann durch eine Feder in die Ausgangsstellung verstellbar sein. Die Feder kann beispielsweise nach Art einer Schraubenfeder ausgebildet sein. Weiterhin kann sich die Feder an der Führung und/oder dem Schließelement abstützen. Der Magnet und/oder das Schließelement ist durch die Feder insbesondere in die Ausgangsstellung bzw. die Schließstellung zurückstellbar, nachdem der Magnet und/oder das Schließelement durch die Flüssigkeit aus der Ausgangsstellung verstellt wurden.

Der Sensor kann an einem Gehäuse des Durchflusssensors angeordnet sein. Insbesondere kann der Sensor an einer Außenseite bzw. Umfangsfläche des Gehäuses befestigt sein.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Sanitärarmatur in einem Längsschnitt;
- Fig. 2:: ein Durchflusssensor der Sanitärarmatur in einer ersten Betriebssituation;
- Fig. 3:: der Durchflusssensor der Sanitärarmatur in einer zweiten Betriebssituation; und
- Fig. 4:: der Durchflusssensor der Sanitärarmatur in einer dritten Betriebssituation.

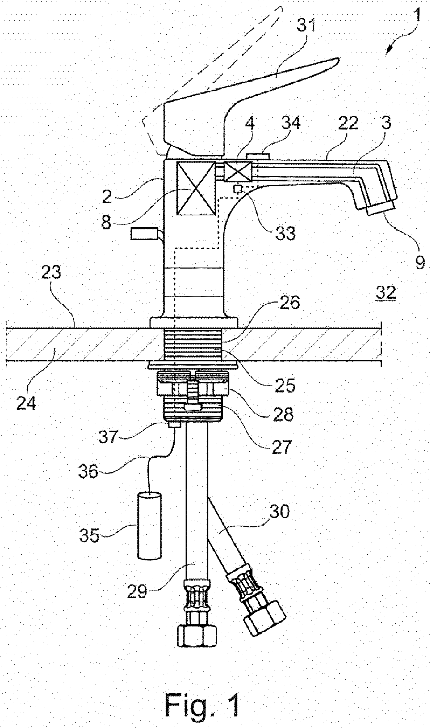

Fig. 1 zeigt eine Sanitärarmatur 1 in einem Längsschnitt. Die Sanitärarmatur 1 umfasst ein Armaturengehäuse 2 mit einem Auslauf 22. Das Armaturengehäuse 2 ist auf einer Oberseite 23 eines Trägers 24 befestigt. Hierzu erstreckt sich das Armaturengehäuse 2 mit einem Montageabschnitt 25 durch eine Montageöffnung 26 des Trägers 24. Der Montageabschnitt 25 weist ein Gewinde 27 auf, sodass das Armaturengehäuse 2 mithilfe eines Befestigungselements 28 an dem Träger 24 befestigbar ist. Das Befestigungselement 28 ist hier nach Art einer Mutter ausgebildet. Die Sanitärarmatur 1 umfasst eine Kaltwasserleitung 29 und eine Warmwasserleitung 30, durch die Kaltwasser und Warmwasser einem Ventil 8 zuführbar sind, das hier nach Art eines Mischventils ausgebildet ist. Das Mischventil ist in dem Armaturengehäuse 2 angeordnet und dient dem Mischen des Kaltwassers und des Warmwassers zu einem Mischwasser mit einer gewünschten Mischwassertemperatur. Hierzu ist das Ventil 8 mit einem Betätigungselement 31 verbunden, das hier als Betätigungshebel ausgebildet ist. Über das Betätigungselement 31 ist sowohl die Mischwassertemperatur als auch eine Entnahmemenge des Mischwassers einstellbar. Klarzustellen ist, dass die Sanitärarmatur 1 auch als sogenannte elektronische Sanitärarmatur 1 ausgebildet sein kann. Eine solche elektronische Sanitärarmatur 1 kann beispielsweise mit einem Infrarotsensor betätigbar sind, das heißt also insbesondere ohne mechanisches Betätigungselement 31. Das Ventil 8 ist über eine Flüssigkeitsleitung 3 mit einer Auslauföffnung 9 des Armaturengehäuses 2 verbunden, sodass das durch das Ventil 8 gemischte Mischwasser über die Flüssigkeitsleitung 3 zu der Auslauföffnung 9 leitbar und über die Auslauföffnung 9 an eine Umgebung 32 der Sanitärarmatur 1 abgebbar ist.

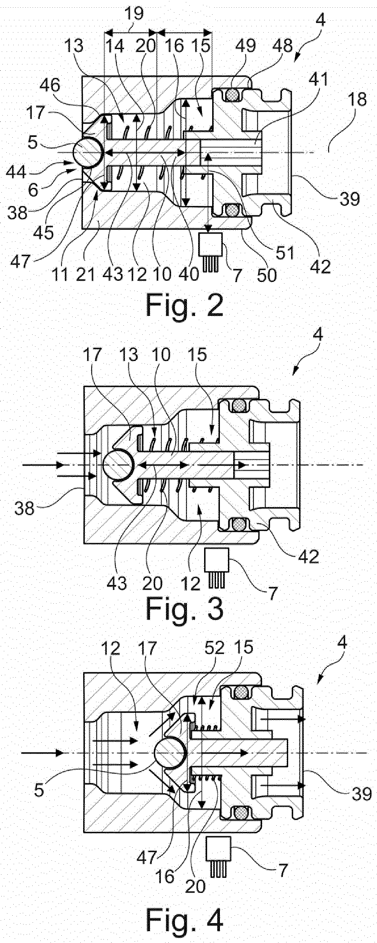

Zwischen dem Ventil 8 und der Auslauföffnung 9 ist in der Flüssigkeitsleitung 3 ein Durchflusssensor 4 angeordnet, durch den ein Flüssigkeitsfluss des Mischwassers detektierbar ist. Ein in den Fig. 2 bis 4 gezeigter Sensor 7 des Durchflusssensors 4 ist mit einer Steuerung 33 verbunden. Die Steuerung 33 ist nach Art eines Mikrocontrollers ausgebildet und dient der Steuerung eines elektrischen Verbrauchers 34, der hier als LED-Display zur Anzeige der Mischwassertemperatur ausgebildet ist. Weiterhin umfasst die Sanitärarmatur 1 eine Energiequelle 35 zur Energieversorgung der Steuerung 33 und des elektrischen Verbrauchers 34. Bei der Energiequelle 35 handelt es sich hier um eine Batterie, die außerhalb des Armaturengehäuses 2 angeordnet und mit einem Kabel 36 lösbar an einer Buchse 37 der Sanitärarmatur 1 angeschlossen ist. Alternativ kann es sich bei der Energiequelle 35 auch um ein Netzteil, beispielweise nach Art eines Niederspannungsnetzteils, handeln.

Fig. 2 zeigt den Durchflusssensor 4 in einem Längsschnitt. Der Durchflusssensor 4 weist ein Gehäuse 21 mit einem Flüssigkeitskanal 12 auf. Der Flüssigkeitskanal 12 erstreckt sich entlang einer Längsachse 18 von einem Flüssigkeitszulauf 38 des Durchflusssensors 4 zu einem Flüssigkeitsablauf 39 des Durchflusssensors 4. Der Flüssigkeitszulauf 38 und der Flüssigkeitsablauf 39 sind an gegenüberliegenden längsseitigen Enden des Gehäuses 21 des Durchflusssensors 4 ausgebildet. Über den Flüssigkeitszulauf 38 ist dem Durchflusssensor 4 das Mischwasser von dem in der Fig. 1 gezeigten Ventil 8 zuführbar. Über den Flüssigkeitsablauf 39 ist das Mischwasser der in der Fig. 1 gezeigten Auslauföffnung 9 zuführbar. Der Durchflusssensor 4 weist ein Schließelement 10 auf, das innerhalb des Flüssigkeitskanals 12 angeordnet ist. Weiterhin ist das Schließelement 10 koaxial zu dem Flüssigkeitskanal 12 bzw. parallel zu der Längsachse 18 angeordnet. Das Schließelement 10 weist einen Führungsschaft 40 auf, mit dem das Schließelement 10 in einer Führungsöffnung 41 einer Führung 42 gelagert ist. Hierdurch ist das Schließelement 10 parallel zu der Längsachse 18 entlang eines Stellwegs 43 verstellbar. Das Schließelement 10 weist an einem ersten längsseitigen Ende 44 eine Dichtgeometrie 17 auf, an der ein Magnet 5 befestigt ist. Die Dichtgeometrie 17 ist kegelstumpfförmig ausgebildet, sodass das Schließelement 10 nach Art eines Hubkegels ausgebildet ist. Der Magnet 5 ist kugelförmig ausgebildet und in einer Aufnahme 45 des Schließelements 10 angeordnet. In der Fig. 2 befindet sich der Durchflusssensor 4 in einer ersten Betriebssituation, bei der dem Durchflusssensor 4 kein Mischwasser über den Flüssigkeitszulauf 38 zugeführt wird. Dies ist insbesondere dann der Fall, wenn das in der Fig. 1 gezeigte Ventil 8 geschlossen ist. In der ersten Betriebssituation wird das Schließelement 10 mit seiner Dichtgeometrie 17 durch eine Feder 20 gegen einen Ventilsitz 46 des Gehäuses 21 gedrückt. Hierdurch befindet sich das Schließelement 10 in einer Schließstellung 11 und der Magnet 5 in einer Ausgangsstellung 6. Die Feder 20 stützt sich an der Führung 42 ab, die in das Gehäuse 21 des Durchflusssensors 4 gesteckt ist. Ein Spalt 48 zwischen der Führung 42 und dem Gehäuse 21 ist durch eine Dichtung 49, die hier nach Art eines O-Rings ausgebildet ist, abgedichtet. Der Durchflusssensor 4 ist nach Art eines Rückschlagventils ausgebildet, sodass der Flüssigkeitskanal 12 durch das Mischwasser nur aus Richtung des Flüssigkeitszulaufs 38 durchströmbar ist. Der Flüssigkeitskanal 12 weist einen ersten Bereich 13 mit einem ersten Innendurchmesser 14 auf, der (im Wesentlichen) einem Außendurchmesser 47 der Dichtgeometrie 17 des Schließelements 10 entspricht. Hierdurch kann (im Wesentlichen) kein Mischwasser an der Dichtgeometrie 17 des Schließelements 10 vorbeiströmen, solange sich die Dichtgeometrie 17 im ersten Bereich 13 des Flüssigkeitskanals 12 befindet. Der erste Bereich 13 erstreckt sich von dem Ventilsitz 46 entlang der Längsachse 18 mit einer ersten Länge 19. Weiterhin weist der Flüssigkeitskanal 12 einen zweiten Bereich 15 mit einem zweiten Innendurchmesser 16 auf, der größer ist als der erste Innendurchmesser 14 des ersten Bereichs 13 des Flüssigkeitskanals 12. Dies hat zur Folge, dass das Mischwasser an der Dichtgeometrie 17 des Schließelements 10 vorbeiströmen kann, wenn sich die Dichtgeometrie 17 in dem zweiten Bereich 15 des Flüssigkeitskanals 12 befindet. Der Sensor 7 ist an einer Außenseite 50 des Gehäuses 21 befestigt und weist zu der Längsachse 18 einen Abstand 51 auf.

Fig. 3 zeigt den Durchflusssensor 4 in einer zweiten Betriebssituation, nachdem das in der Fig. 1 gezeigte Ventil 8 geöffnet wurde. Hierdurch strömt das Mischwasser über den Flüssigkeitszulauf 38 gegen die Dichtgeometrie 17 des Schließelements 10, sodass das Schließelement 10 entlang des Stellwegs 43 entgegen einer Kraft der Feder 20 in Richtung der Führung 42 bzw. in Richtung des zweiten Bereichs 15 des Flüssigkeitskanals 12 verstellt wird. In der Fig. 3 befindet sich die Dichtgeometrie 17 noch in dem ersten Bereich 13 des Flüssigkeitskanals 12, sodass das Mischwasser nicht an der Dichtgeometrie 17 vorbeiströmen kann.

Fig. 4 zeigt den Durchflusssensor 4 in einer dritten Betriebssituation, nachdem die Dichtgeometrie 17 des Schließelements 10 durch das Mischwasser in eine Offenstellung 52 verstellt wurde. In der Offenstellung 52 befindet sich die Dichtgeometrie 17 in dem zweiten Bereich 15 des Flüssigkeitskanals 12. Da der zweite Innendurchmesser 16 des zweiten Bereichs 15 größer ist als der Außendurchmesser 47 der Dichtgeometrie 17, kann das Mischwasser an der Dichtgeometrie 17 vorbeiströmen und über den Flüssigkeitsablauf 39 in Richtung der in der Fig. 1 gezeigten Auslauföffnung 9 der Sanitärarmatur 1 strömen. In der Offenstellung 52 stellt sich ein Gleichgewicht zwischen einer Kraft, die durch das vorbeiströmende Mischwasser auf das Schließelement 10 wirkt, und der Federkraft der Feder 20 ein. In der Offenstellung 52 des Schließelements 10 hat sich eine Distanz zwischen dem Magnet 5 und dem Sensor 7 reduziert, sodass ein Magnetfeld des Magnets 5 durch den Sensor 7 detektierbar ist. Hierdurch gibt der Sensor 7 ein elektrisches Signal an die in der Fig. 1 gezeigte Steuerung 33 ab. Anschließend kann die Steuerung 33 den elektrischen Verbraucher 34 aktivieren, sodass durch diesen die Mischwassertemperatur anzeigbar ist. Wird das Ventil 8 wieder geschlossen, wird das Schließelement 10 durch die Feder 20 wieder in die in der Fig. 2 gezeigte Schließstellung 11 zurückgestellt, sodass sich der Magnet 5 wieder in der Ausgangsstellung 6 befindet. In der Ausgangsstellung 6 ist das Magnetfeld des Magnets 5 durch den Sensor 7 nicht mehr erkennbar und beendet daher das elektrische Signal an die Steuerung 33. Die Steuerung 33 deaktiviert daraufhin den elektrischen Verbraucher 34.

Durch die vorliegende Erfindung ist der Energiebedarf einer Sanitärarmatur ohne schmutzanfällige Mittel reduzierbar. Zudem ist der Durchflusssensor in beliebigen Einbaulagen in der Sanitärarmatur anordenbar.

### Bezugszeichenliste

- 1: Sanitärarmatur
- 2: Armaturengehäuse
- 3: Flüssigkeitsleitung
- 4: Durchflusssensor
- 5: Magnet
- 6: Ausgangsstellung
- 7: Sensor
- 8: Ventil
- 9: Auslauföffnung
- 10: Schließelement
- 11: Schließstellung
- 12: Flüssigkeitskanal
- 13: erster Bereich
- 14: erster Innendurchmesser
- 15: zweiter Bereich
- 16: zweiter Innendurchmesser
- 17: Dichtgeometrie
- 18: Längsachse
- 19: Länge
- 20: Feder
- 21: Gehäuse
- 22: Auslauf
- 23: Oberseite
- 24: Träger
- 25: Montageabschnitt
- 26: Montageöffnung
- 27: Gewinde
- 28: Befestigungselement
- 29: Kaltwasserleitung
- 30: Warmwasserleitung
- 31: Betätigungselement
- 32: Umgebung
- 33: Steuerung
- 34: elektrischer Verbraucher
- 35: Energiequelle
- 36: Kabel
- 37: Buchse
- 38: Flüssigkeitszulauf
- 39: Flüssigkeitsablauf
- 40: Führungsschaft
- 41: Führungsöffnung
- 42: Führung
- 43: Stellweg
- 44: erstes längsseitiges Ende
- 45: Aufnahme
- 46: Ventilsitz
- 47: Außendurchmesser
- 48: Spalt
- 49: Dichtung
- 50: Außenseite
- 51: Abstand
- 52: Offenstellung

## Patentansprüche

1. Sanitärarmatur (1), zumindest aufweisend:
- ein Armaturengehäuse (2) mit einer Flüssigkeitsleitung (3); und
- einen Durchflusssensor (4) zum Detektieren eines Flüssigkeitsflusses durch die Flüssigkeitsleitung (3), wobei der Durchflusssensor (4) einen Magnet (5) aufweist, der durch die Flüssigkeit aus einer Ausgangsstellung (6) verstellbar ist, und wobei ein Verstellen des Magnets (5) aus der Ausgangsstellung (6) durch einen Sensor (7) des Durchflusssensors (4) detektierbar ist, wobei der Magnet (5) in einem Flüssigkeitskanal (12) des Durchflusssensors (4) angeordnet und darin durch eine Führung (42) geführt ist, die nach Art einer Linearführung ausgebildet ist, **dadurch gekennzeichnet, dass** der Durchflusssensor (4) zwischen einem Ventil (8) der Sanitärarmatur (1) und einer Auslauföffnung (9) der Sanitärarmatur (1) angeordnet ist.

2. Sanitärarmatur (1) nach einem der vorhergehenden Patentansprüche, wobei der Durchflusssensor (4) nach Art eines Rückschlagventils ausgebildet ist.

3. Sanitärarmatur (1) nach einem der vorhergehenden Patentansprüche, wobei der Magnet (5) an einem Schließelement (10) des Durchflusssensors (4) befestigt ist.

4. Sanitärarmatur (1) nach Patentanspruch 3, wobei sich das Schließelement (10) in der Ausgangsstellung (6) des Magnets (5) in einer Schließstellung (11) befindet.

5. Sanitärarmatur (1) nach Patentanspruch 3 oder 4, wobei das Schließelement (10) in einem Flüssigkeitskanal (12) des Durchflusssensors (4) angeordnet ist und wobei der Flüssigkeitskanal (12) einen ersten Bereich (13) mit einem ersten Innendurchmesser (14) und einen zweiten Bereich (15) mit einem zweiten Innendurchmesser (16) aufweist.

6. Sanitärarmatur (1) nach Patentanspruch 5, wobei eine Dichtgeometrie (17) des Schließelements (10) den Flüssigkeitskanal (12) in dem ersten Bereich (13) verschließt und in dem zweiten Bereich (15) freigibt.

7. Sanitärarmatur (1) nach Patentanspruch 5 oder 6, wobei der erste Bereich (13) des Flüssigkeitskanals (12) parallel zu einer Längsachse (18) des Flüssigkeitskanals (12) eine erste Länge (19) von 5 mm bis 50 mm aufweist.

8. Sanitärarmatur (1) nach einem der vorhergehenden Patentansprüche, wobei der Magnet (5) durch eine Feder (20) des Durchflusssensors (4) in die Ausgangsstellung (6) verstellbar ist.

9. Sanitärarmatur (1) nach einem der vorhergehenden Patentansprüche, wobei der Sensor (7) an einem Gehäuse (21) des Durchflusssensors (4) angeordnet ist.

## Claims

1. A sanitary fitting (1), at least having:
- a fitting housing (2) with a liquid line (3); and
- a flow sensor (4) for detecting a liquid flow through the liquid line (3), wherein the flow sensor (4) has a magnet (5) that can be adjusted by the liquid from an initial position (6), and wherein adjusting the magnet (5) from the initial position (6) can be detected by a sensor (7) of the flow sensor (4), wherein the magnet (5) is arranged in a liquid channel (12) of the flow sensor (4) and is guided therein by a guide (42) that is designed in the manner of a linear guide, **characterized in that** the flow sensor (4) is arranged between a valve (8) of the sanitary fitting (1) and an outlet opening (9) of the sanitary fitting (1).

2. The sanitary fitting (1) according to any one of the preceding claims, wherein the flow sensor (4) is designed in the manner of a check valve.

3. The sanitary fitting (1) according to any one of the preceding claims, wherein the magnet (5) is fastened to a closing element (10) of the flow sensor (4).

4. The sanitary fitting (1) according to claim 3, wherein the closing element (10) is in a closed position (11) when the magnet (5) is in the initial position (6).

5. The sanitary fitting (1) according to claim 3 or 4, wherein the closing element (10) is arranged in a liquid channel (12) of the flow sensor (4), and wherein the liquid channel (12) has a first region (13) with a first internal diameter (14) and a second region (15) with a second internal diameter (16).

6. The sanitary fitting (1) according to claim 5, wherein a sealing geometry (17) of the closing element (10) closes off the liquid channel (12) in the first region (13) and unblocks it in the second region (15).

7. The sanitary fitting (1) according to claim 5 or 6, wherein the first region (13) of the liquid channel (12) has a first length (19) of 5 mm to 50 mm parallel to a longitudinal axis (18) of the liquid channel (12).

8. The sanitary fitting (1) according to any one of the preceding claims, wherein the magnet (5) can be adjusted to the initial position (6) by a spring (20) of the flow sensor (4).

9. The sanitary fitting (1) according to any one of the preceding claims, wherein the sensor (7) is arranged on a housing (21) of the flow sensor (4).

## Revendications

1. Robinetterie sanitaire (1), comportant au moins :
- un corps de robinetterie (2), doté d'une conduite de liquide (3) ; et
- un capteur de débit (4), destiné à détecter un flux de liquide à travers la conduite de liquide (3), le capteur de débit (4) comportant un aimant (5), qui est réglable par le liquide à partir d'une position initiale (6) et un réglage de l'aimant (5) hors de la position initiale (6) étant détectable par un capteur (7) du capteur de débit (4), l'aimant (5) étant placé dans un canal à liquide (12) du capteur de débit (4) et étant guidé dans celui-ci par un guidage (42), qui est conçu à la manière d'un guidage linéaire, **caractérisé en ce que** le capteur de débit (4) est placé entre une valve (8) de la robinetterie sanitaire (1) et un orifice d'écoulement (9) de la robinetterie sanitaire (1).

2. Robinetterie sanitaire (1) selon l'une quelconque des revendications précédentes du brevet, le capteur de débit (4) étant conçu à la manière d'un clapet anti-retour.

3. Robinetterie sanitaire (1) selon l'une quelconque des revendications précédentes du brevet, l'aimant (5) étant fixé sur un élément de fermeture (10) du capteur de débit (4).

4. Robinetterie sanitaire (1) selon la revendication 3 du brevet, dans la position initiale (6) de l'aimant (5), l'élément de fermeture (10) se trouvant dans une position de fermeture (11).

5. Robinetterie sanitaire (1) selon la revendication 3 ou 4 du brevet, l'élément de fermeture (10) étant placé dans un canal à liquide (12) du capteur de débit (4) et le canal à liquide (12) comportant une première zone (13), avec un premier diamètre intérieur (14) et une deuxième zone (15), avec un deuxième diamètre intérieur (16).

6. Robinetterie sanitaire (1) selon la revendication 5 du brevet, une géométrie d'étanchéité (17) de l'élément de fermeture (10) fermant le canal à liquide (12) dans la première zone (13) et le libérant dans la deuxième zone (15).

7. Robinetterie sanitaire (1) selon la revendication 5 ou 6 du brevet, la première zone (13) du canal à liquide (12) comportant à la parallèle d'un axe longitudinal (18) du canal à liquide (12) une première longueur (19) de 5 mm à 50 mm.

8. Robinetterie sanitaire (1) selon l'une quelconque des revendications précédentes du brevet l'aimant (5) étant réglable dans la position initiale (6) par un ressort (20) du capteur de débit (4).

9. Robinetterie sanitaire (1) selon l'une quelconque des revendications précédentes du brevet, le capteur (7) étant placé sur un boîtier (21) du capteur de débit (4).
